# EUROPÄISCHE PATENTSCHRIFT

(11) **EP 3 020 621 B1**
(45) Veröffentlichungstag und Bekanntmachung des Hinweises auf die Patenterteilung: **09.11.2016**
(21) Anmeldenummer: 14003850.6
(22) Anmeldetag: 14.11.2014
(51) Int. Cl.: B62M 6/45, B62M 6/65

(54) **Sensoranordnung zur Steuerung eines Hilfsmotors sowie Radnabeneinheit mit einer derartigen Sensoranordnung**
Sensor assembly for controlling an auxiliary motor and wheel hub unit having such a sensor assembly
Dispositif de détection destiné à la commande d'un moteur auxiliaire ainsi qu'unité de moyeu de roue dotée d'un tel dispositif de détection

(43) Veröffentlichungstag der Anmeldung: 18.05.2016
(73) Patentinhaber: Lakeview Innovation Ltd., 6374 Buochs (CH)
(72) Erfinder: Chen, Zhao, 8800 Thalwil (CH); Fölmli, Franz-Xaver, 6370 Oberdorf (CH); Busse-Grawitz, Max Erick, 6055 Alpnach Dorf (CH); Trachsel, Mathis, 6006 Luzern (CH)
(74) Vertreter: Grünecker Patent- und Rechtsanwälte PartG mbB

(56) Entgegenhaltungen:
- EP-A1- 2 799 327
- EP-A2- 1 679 256
- WO-A1-2011/038481
- WO-A1-2012/123801
- WO-A1-2012/125165
- WO-A1-2013/097281
- WO-A1-2014/174403
- CN-A- 102 156 196
- CN-A- 103 051 103
- JP-A- 2002 321 680
- JP-A- 2011 110 944
- US-A- 5 031 455
- US-A1- 2014 171 258

## Beschreibung

Die vorliegende Erfindung betrifft eine Anordnung eines Sensors nach dem Oberbegriff des unabhängigen Anspruchs 1. Das Signal des Sensors wird zur Steuerung eines Hilfsmotors eines muskelkraftbetriebenen Fahrzeugs, beispielsweise eines elektrisch unterstützten Fahrrads, verwendet. Ferner betrifft die vorliegende Erfindung eine Radnabeneinheit für ein muskelkraftbetriebenes Fahrzeug.

In den vergangenen Jahren hat die Nachfrage nach elektrisch unterstützten Fahrrädern, sogenannten Pedelecs bzw. E-Bikes, stetig zugenommen. E-Bikes eignen sich beispielsweise hervorragend, um längere Distanzen zu überbrücken oder auch bei eher geringer körperlicher Leistungsfähigkeit beträchtliche Höhenunterschiede zu bewältigen. Insbesondere für ältere Menschen bietet der Einsatz eines elektrischen Hilfsmotors die Möglichkeit, bis ins hohe Alter mit dem Fahrrad aktiv zu bleiben.

Mittlerweile ist eine Vielzahl an technischen Lösungen zur Integration des elektrischen Hilfsantriebs bekannt. Neben einer Integration des elektrischen Hilfsmotors in das Tretlager oder im Bereich des Tretlagers kommen auch weiterhin Hilfsmotoren zum Einsatz, die in einer Radnabe des Fahrrads integriert sind. Eine derartige Lösung ist beispielsweise aus EP 2562072 A1 bekannt. Der in dieser Druckschrift beschriebene Hilfsmotor kann entweder in die Vorderradnabeneinheit oder in die Hinterradnabeneinheit des Fahrrads integriert sein. Eine besondere Herausforderung stellt sich bei der Steuerung des elektrischen Hilfsmotors. Der Hilfsmotor soll nur dann zugeschaltet werden, wenn die Pedale in Vorwärtsrichtung bewegt werden. Es ist daher in der Regel erforderlich, die Rotation der Tretlagerkurbel zu erfassen und zur Steuerung des Hilfsmotors entsprechend auszuwerten. Sofern der Hilfsmotor nicht im Bereich des Tretlagers angeordnet ist, muss das Sensorsignal über relativ weite Signalstrecken und eine entsprechende elektrische Verbindung bis zur Steuereinheit des Hilfsmotors übertragen werden. Befindet sich der elektrische Hilfsantrieb beispielsweise in der Hinterradnabeneinheit, so muss das Sensorsignal über eine entsprechende elektrische Verbindungsleitung, die an oder in den Streben des Fahrradrahmens verläuft, zur Steuereinheit des Hilfsmotors übertragen werden. Als Alternative dazu aber bedeutend aufwendiger kann das Sensorsignal auch drahtlos übertragen werden.

Sensoranordnungen zur Erfassung der Rotation einer Welle sind grundsätzlich aus dem Stand der Technik bekannt. In DE 202011107127 U1 ist beispielsweise beschrieben, dass das Ausgangssignal eines in die Fahrradnabe integrierten Generators zur Berechnung der Drehgeschwindigkeit ausgewertet werden kann. Alternativ dazu ist eine Lösung beschrieben, bei der ein sich mit der Nabe mitdrehender Encoder von einem mit der Achse der Fahrradnabe verbundenen Hall-Sensor abgetastet wird. Die Abtastung eines magnetischen Encoderrades durch einen entsprechenden Magnetsensor ist beispielsweise auch in DE 19906937 A1 beschrieben.

Sensoranordnungen gemäß dem Oberbegriff des unabhängigen Anspruchs 1 sind beispielsweise aus CN 103051103 A, EP 1679256 A2, WO 2012/125165 A1, CN 102156196 A, JP 2011110944 A, WO 2013/097281 A1, WO 2014/174403 A1, WO 2012/123801 A1 und WO 2011/038481 A1 bekannt.

Der vorliegenden Erfindung liegt die Aufgabe zugrunde, eine möglichst einfache, sichere und kostengünstige Lösung für die Anordnung des Sensors anzugeben.

Die Aufgabe wird gelöst durch die Merkmale des unabhängigen Anspruchs 1.

Die erfindungsgemäße Lösung bietet vor allen Dingen den Vorteil, dass Sensor und Hilfsmotor sehr nah beieinander angeordnet sind, wodurch eine aufwendige Verkabelung des Sensors nicht mehr erforderlich ist. Zudem können sowohl der Sensor als auch der Hilfsmotor in die Radnabeneinheit integriert werden, so dass diese als vollständig einsetzbare Baugruppe verkauft und ohne größeren Montageaufwand verbaut werden kann. Die Erfindung bietet aus diesem Grund auch eine besonders sichere und kostengünstige Lösung. Durch die flexible Leiterplatte wird die Montage der Radnabeneinheit erheblich vereinfacht. Zudem wird dadurch eine sichere elektrische Verbindung zwischen Sensor und Steuereinheit gewährleistet. Die elektrische Verbindung ist dabei in Form von Leiterbahnen in der flexiblen Leiterplatte integriert. Eine aufwendige Verkabelung entfällt. Dadurch, dass ein zwischen Sensor und Steuereinheit verlaufender Abschnitt der flexiblen Leiterplatte zwischen äußerem Achsenelement und innerem Achsenelement geführt ist, ist die elektrische Verbindung zwischen Sensor und Hilfsmotor bzw. dessen Steuereinheit besonders geschützt untergebracht.

Vorzugsweise handelt es sich bei der Radnabeneinheit um die Hinterradnabeneinheit eines Fahrrads. Weiter vorzugsweise handelt es sich bei dem Hilfsmotor um einen Elektromotor. Dieser ist ferner vorzugsweise in die Nabe integriert. Der Integration in die Radnabeneinheit steht es allerdings nicht entgegen, dass der Elektromotor alternativ dazu beispielsweise neben der Nabe angeordnet und fest mit der Achse verbunden ist. Bei dem Freilauf handelt es sich vorzugsweise um den Kettenfreilauf des Fahrrads, welcher relativ zu der Achse und relativ zu der Nabe drehbar gelagert ist und bei entsprechender Vorwärtsbewegung der Pedale über Sperrklinken, Klemmkörper, Klemmkugeln oder eine Verzahnung mit der Nabe in mitnehmenden Eingriff gebracht werden kann. Der Freilauf ist vorzugsweise seitlich neben dem Hilfsmotor angeordnet. Unter einem Kettenfreilauf ist im Rahmen der vorliegenden Anmeldung auch ein riemengetriebener Freilauf zu verstehen.

Vorteilhafte Ausführungsformen der vorliegenden Erfindung sind Gegenstand der Unteransprüche.

In einer bevorzugten Ausführungsform der vorliegenden Erfindung umfasst die Anordnung ferner die Achse, wobei der Sensor an der Achse befestigt ist. Auf diese Weise ist der Sensor platzsparend und vor allen Dingen sicher vor Beschädigung in die Radnabeneinheit integriert.

In einer weiteren besonders bevorzugten Ausführungsform der vorliegenden Erfindung weist der Freilauf einen Magnetring auf, wobei der Sensor zumindest einen Magnetsensor zur Abtastung des Magnetrings aufweist. Diese Ausführungsform ist besonders kostengünstig und einfach auszuführen. Vor allen Dingen ermöglicht diese Ausführungsform auch dann noch eine sichere Erfassung der Rotation des Freilaufs, wenn zwischen Freilauf und Sensor noch weitere Bauteile untergebracht werden müssen. Beispielsweise kann sich bei dieser Ausführungsform zwischen Freilauf bzw. Magnetring und Sensor noch eine Hülse befinden, die auf die Achse aufgesteckt ist und den Sensor abdeckt und vor Beschädigung schützt. Die Hülse besteht dabei aus einem nicht-ferromagnetischen Material und ist vorzugsweise aus Aluminium oder Kunststoff gefertigt. Der Magnetring umschließt die Achse und ist vorzugsweise koaxial zur Achse angeordnet.

Um die Rotation des Freilaufs möglichst genau zu erfassen, ist der Magnetring gemäß einer weiteren bevorzugten Ausführungsform als Permanentmagnet ausgeführt und weist dabei mehrere gleichmäßig über den Umfang des Magnetrings verteilte Pole auf. Besonders bevorzugt weist der Magnetring 16 Pole auf.

In einer weiteren bevorzugten Ausführungsform der vorliegenden Erfindung handelt es sich bei dem Magnetsensor um einen Hall-Sensor. Hall-Sensoren eignen sich besonders gut, um auch relativ schwache magnetische Felder abzutasten. Zudem sind Hall-Sensoren mittlerweile in extrem kompakter Ausführung erhältlich und zudem kostengünstig. Die Anordnung kann besonders kompakt ausgeführt werden, wenn der Magnetsensor in einer weiteren bevorzugten Ausführungsform als Flip-Chip-Sensor ausgeführt ist.

In einer weiteren besonders bevorzugten Ausführungsform der vorliegenden Erfindung weist der Sensor zwei Magnetsensoren auf, die in Umfangsrichtung voneinander beabstandet angeordnet sind.

Durch die Verwendung zweier Magnetsensoren kann auch die Richtung der Rotation zuverlässig bestimmt werden. Auf diese Weise wird verhindert, dass der Hilfsmotor zugeschaltet wird, obwohl der Radfahrer nicht vorwärts sondern rückwärts tritt. Um eine einwandfreie Abtastung zu gewährleisten, ist der Winkelabstand der beiden Magnetsensoren vorzugsweise geringer als die Teilung des Magnetrings. Vorzugsweise trägt der Winkelabstand ungefähr die Hälfte der Teilung.

Besonders bevorzugt weist die flexible Leiterplatte gemäß einer weiteren Ausführungsform zumindest einen Abschnitt auf, der als länglicher Streifen ausgebildet ist. Der längliche Streifen kann besonders einfach entlang der Achse oder durch die Achse hindurchgeführt werden, wobei letztere Alternative bevorzugt wird. Auf diese Weise ist die elektrische Verbindung sicher und vor Beschädigung geschützt untergebracht.

In einer weiteren bevorzugten Ausführungsform der vorliegenden Erfindung sind das äußere Achsenelement und das innere Achsenelement jeweils im Wesentlichen hohlzylindrisch ausgeführt. Das innere Achsenelement liegt dabei vorzugsweise an der Innenwandung des äußeren Achsenelements an. Das äußere Achsenelement weist weiter vorzugsweise zwei Öffnungen zur Durchführung der flexiblen Leiterplatte auf. Eine der Öffnungen liegt dabei im Bereich des Sensors, die andere im Bereich der Steuereinheit bzw. an der Position, an welcher die elektrische Verbindung aus der Achse zur Steuereinheit herausgeführt werden muss. Weiter vorzugsweise befinden sich die beiden Öffnungen im Wesentlichen an gegenüberliegenden Enden der Achse.

Weiter von Vorteil ist es, wenn das innere Achsenelement außen eine in Achsrichtung verlaufende Nut oder Ausnehmung zur Aufnahme der flexiblen Leiterplatte aufweist. Neben der geschützten Unterbringung der Leiterplatte wird dadurch auch die Montage erleichtert. Alternativ dazu ist es denkbar, die Nut oder Ausnehmung in die Innenwandung des äußeren Achsenelements einzubringen. Eine äußere Nut des inneren Achsenelements kann jedoch erheblich einfacher hergestellt werden.

Weiter bevorzugt weist das äußere Achsenelement außen eine Vertiefung bzw. Ausnehmung für den Sensor auf. Auf diese Weise ist der Sensor zum einen kompakt in die Achse der Radnabeneinheit integriert. Zudem ist der Sensor dadurch geschützt untergebracht, da er nicht über den Außenumfang der Achse hervorsteht.

In einer weiteren besonders bevorzugten Ausführungsform der vorliegenden Erfindung ist die Achse als magnetischer Rückschluss des Magnetrings ausgeführt. Dadurch werden die magnetische Flussdichte und damit auch das Sensorsignal verstärkt. Eine sichere Erfassung der Rotation ist damit gewährleistet.

Die vorliegende Erfindung stellt auch eine Radnabeneinheit für ein muskelkraftbetriebenes Fahrzeug mit der erfindungsgemäßen Anordnung bereit. Ein vorteilhaftes Ausführungsbeispiel der vorliegenden Erfindung wird im Folgenden anhand von Zeichnungen näher erläutert.

Es zeigen:
- Figur 1:: einen Längsschnitt durch eine erfindungsgemäße Radnabeneinheit,
- Figur 2:: eine Explosionsdarstellung der Achse der erfindungsgemäßen Radnabeneinheit aus Figur 1,
- Figur 3:: eine flexible Leiterplatte in einer Draufsicht, auf welcher der Sensor der erfindungsgemäßen Radnabeneinheit aus Figur 1 aufgebracht ist,
- Figur 4:: einen Querschnitt durch die erfindungsgemäße Radnabeneinheit entlang der in Figur 1 gezeigten Schnittlinie A.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

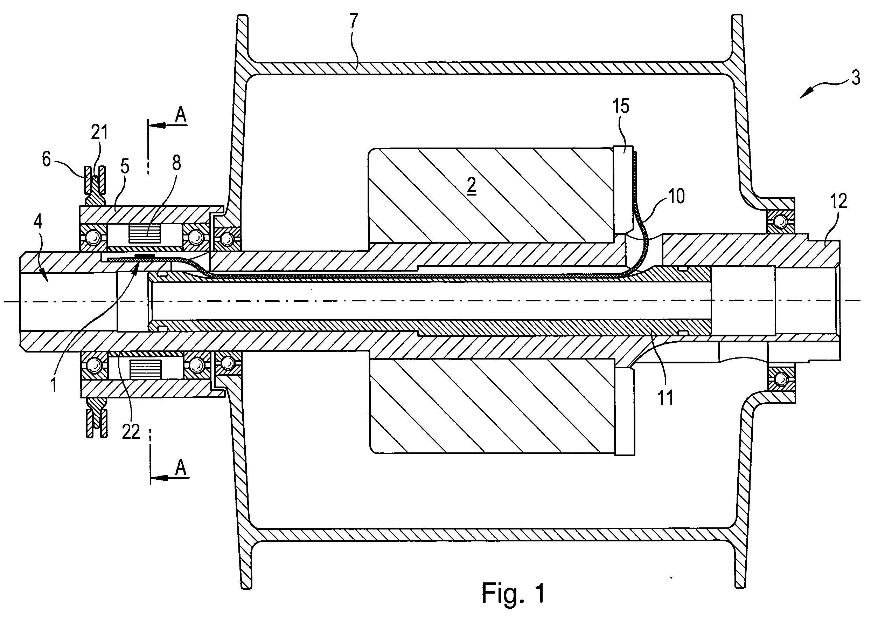

Figur 1 zeigt einen teilweise stark vereinfachten bzw. schematisierten Längsschnitt einer erfindungsgemäßen Radnabeneinheit 3, die für den Antrieb des Hinterrads eines Fahrrads ausgelegt ist. Die Radnabeneinheit umfasst eine feststehende Achse 4, die zwischen den Ausfallenden des nicht dargestellten Fahrradrahmens angeordnet und fest mit dem Rahmen verbunden ist. Die Nabe 7 des ebenfalls nicht dargestellten Hinterrads ist drehbar auf der feststehenden Achse 4 gelagert. Die Nabe 7 kann auf herkömmliche Weise mit Muskelkraft angetrieben werden. Hierzu ist eine Kette 6 vorgesehen, die zwischen einem Zahnradblatt der Tretkurbel und einem entsprechenden Ritzel 21 an der Hinterradachse 4 verläuft. Das Ritzel 21 befindet sich auf einem Freilauf 5, der gegenüber der Nabe 7 und gegenüber der Achse 4 drehbar gelagert ist und mittels einer nicht dargestellten Verzahnungsvorrichtung mit der Nabe 7 in Eingriff kommt, wenn die mit der Tretkurbel verbundenen Pedale in Vorwärtsrichtung bewegt werden.

Zusätzlich ist in die Radnabeneinheit 3 ein Elektromotor 2 als Hilfsmotor integriert. Der Hilfsmotor wird nur zugeschaltet, wenn die Pedale bewegt werden. Er ist in der Darstellung lediglich schematisch gezeigt und weist einen mit der Achse 4 fest verbundenen Stator sowie einen Rotor auf, der gegebenenfalls über ein Getriebe mit der Nabe 7 in mitnehmendem Eingriff steht.

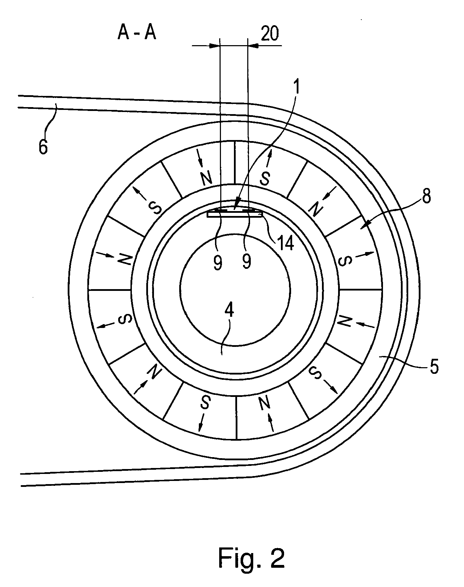

Zur Steuerung des Hilfsmotors muss festgestellt werden, ob die Pedale betätigt werden oder nicht. Hierzu wird die Rotation des Freilaufs 5 gegenüber der Achse 4 erfasst. Zu diesem Zweck ist mit dem Freilauf 5 ein Magnetring 8 verbunden, der von einem entsprechenden Sensor 1 abgetastet wird. Wie in Figur 1 dargestellt, ist der Magnetring 8 innerhalb des Freilaufs 5 angeordnet und am Innenumfang des Freilaufs angebracht. Der Sensor 1 hingegen ist fest an der Achse 4 des Radnabenantriebs installiert. Die Querschnittsdarstellung in Figur 2 zeigt, dass der Magnetring 8 mehrpolig ausgeführt ist. Er weist insgesamt 16 Pole auf, die in Umfangsrichtung gleichmäßig verteilt sind. Der Magnetring kann durch Segmente gebildet werden, die in radialer Richtung abwechselnd unterschiedlich gepolt sind. Der Magnetring kann alternativ dazu selbstverständlich auch aus einem Stück gefertigt und entsprechend magnetisiert sein. In Figur 2 ist ferner zu erkennen, dass der Sensor 1 aus zwei Hall-Sensoren 9 besteht, die in Umfangsrichtung betrachtet beabstandet zueinander angeordnet sind. Der Abstand 20 beträgt in etwa die Hälfte der Teilung des Magnetrings. Durch die Verwendung zweier Sensoren kann auch die Richtung der Rotation des Freilaufs bestimmt werden. Dadurch wird vermieden, dass der Hilfsmotor 2 zugeschaltet wird, obwohl die Pedale nicht in Vorwärtsrichtung sonder in Rückwärtsrichtung bewegt werden.

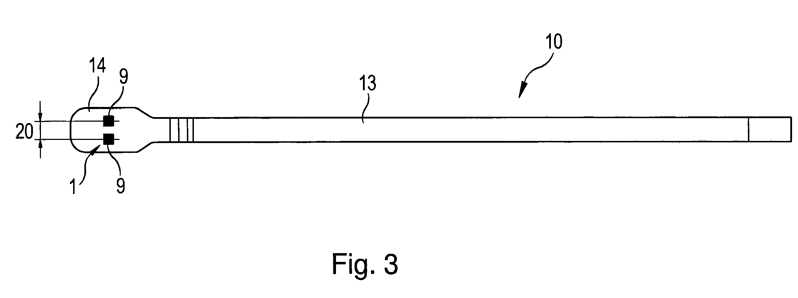

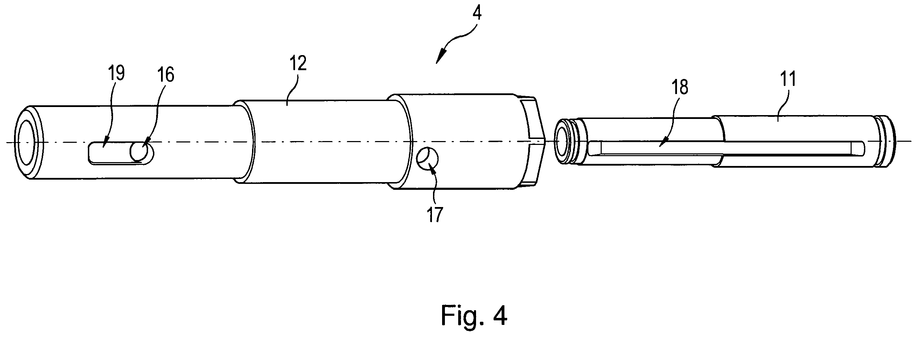

Die beiden Hall-Sensoren 9 sind als Flip-Chip-Sensoren ausgebildet und auf den Kopfabschnitt 14 der in Figur 3 gezeigten flexiblen Leiterplatte 10 aufgebracht. Die flexible Leiterplatte 10 ist insgesamt länglich ausgeführt und umfasst neben dem Kopfabschnitt 14 einen länglichen Streifen 13, in dem Leiterbahnen verlaufen, die die elektrische Verbindung zwischen dem Sensor und der in Figur 1 schematisch dargestellten Steuereinheit 15 des Hilfsmotors 2 bilden. Wie in Figur 1 gezeigt ist, ist die flexible Leiterplatte durch die feststehende Achse 4 hindurchgeführt. Die feststehende Achse weist zu diesem Zweck zwei Durchgangsöffnungen auf. Wie in Figur 1 und in Figur 4 dargestellt ist, ist die Achse 4 zweiteilig aufgebaut und umfasst ein äußeres Achsenelement 12 und ein in das äußere Achsenelement 12 eingesetztes inneres Achsenelement 11. Beide Achsenelemente sind im Wesentlichen hohlzylindrisch ausgebildet, wobei das innere Achsenelement an der Innenwandung des äußeren Achsenelements anliegt. Die beiden in Figur 4 dargestellten Durchgangsöffnungen 16 und 17 für die flexible Leiterfolie sind in dem äußeren Achsenelement 12 ausgebildet. Neben der linken Durchgangsöffnung 16 befindet sich in dem äußeren Achsenelement 12 am Außenumfang eine Vertiefung 19, in welcher der Kopfabschnitt 14 der flexiblen Leiterplatte zusammen mit den beiden Hall-Sensoren aufgenommen ist. Der Kopfabschnitt und die beiden Hall-Sensoren sind von einer in Figur 1 gezeigten Hülse 22 aus nicht-ferromagnetischem Material, vorzugsweise aus Aluminium oder Kunststoff, abgedeckt. Die Hülse bildet in axialer Richtung einen Abstandhalter zwischen den beiden Wälzlagern des Freilaufs. Sie schützt den Sensor vor Beschädigung. Innerhalb der Achse verläuft die flexible Leiterplatte zwischen dem äußeren Achsenelement und dem inneren Achsenelement. Das innere Achsenelement 11 weist zur Aufnahme des länglichen Streifens 13 der flexiblen Leiterplatte eine entsprechende in Achsrichtung verlaufende Nut 18 am Außenumfang auf.

Die Signale der beiden Hall-Sensoren 9 werden von der Steuereinheit 15 des Hilfsmotors 2 entsprechend ausgewertet. Dabei können auch die Geschwindigkeit und die Beschleunigung bestimmt werden. Diese Informationen können dazu verwendet werden, den Unterstützungsgrad des Hilfsmotors 2 zu regeln.

## Patentansprüche

1. Anordnung eines Sensors (1), dessen Signal zur Steuerung eines Hilfsmotors (2) eines muskelkraftbetriebenen Fahrzeugs verwendet wird, wobei der Hilfsmotor (2) in eine Radnabeneinheit (3) des Fahrzeugs integriert ist, wobei die Radnabeneinheit (3) eine feststehende Achse (4), eine drehbar an der Achse (4) gelagerte Nabe (7) und einen gegenüber der Achse (4) drehbar gelagerten Freilauf (5) des muskelkraftbetriebenen Antriebsstrangs aufweist, und wobei die Anordnung den Sensor (1) und den Freilauf (5) umfasst, wobei der Sensor (1) derart angeordnet ist, dass er eine Rotationsbewegung des Freilaufs (5) gegenüber der Achse (4) erfasst, **dadurch gekennzeichnet, dass** die Anordnung ferner die Achse (4) umfasst und der Sensor (1) auf einer flexiblen Leiterplatte (10) angeordnet ist und die flexible Leiterplatte (10) eine elektrische Verbindung für den Anschluss des Sensors (1) an einer Steuereinheit (15) des Hilfsmotors (2) aufweist, und die Achse (4) ein äußeres Achsenelement (12) und ein in das äußere Achsenelement (12) eingesetztes inneres Achsenelement (11) aufweist, wobei zumindest ein zwischen Sensor (1) und Steuereinheit (15) verlaufender Abschnitt der flexiblen Leiterplatte (10) zwischen äußerem Achsenelement (12) und innerem Achsenelement (11) aufgenommen ist.

2. Anordnung nach Anspruch 1, **dadurch gekennzeichnet, dass** der Sensor (1) an der Achse (4) befestigt ist.

3. Anordnung nach Anspruch 1 oder 2, **dadurch gekennzeichnet, dass** der Freilauf (5) einen Magnetring (8) aufweist, wobei der Sensor (1) zumindest einen Magnetsensor (9) zur Abtastung des Magnetrings (8) aufweist.

4. Anordnung nach Anspruch 3, **dadurch gekennzeichnet, dass** der Magnetring (8) als Permanentmagnet ausgeführt ist und mehrere gleichmäßig über den Umfang des Magnetrings (8) verteilte Pole aufweist.

5. Anordnung nach Anspruch 3 oder 4, **dadurch gekennzeichnet, dass** der Magnetsensor (9) ein Hallsensor ist.

6. Anordnung nach einem der Ansprüche 3 bis 5, **dadurch gekennzeichnet, dass** der Magnetsensor (9) als Flip-Chip Sensor ausgeführt ist.

7. Anordnung nach einem der Ansprüche 3 bis 6, **dadurch gekennzeichnet, dass** der Sensor (1) zwei Magnetsensoren (9) aufweist, die in Umfangsrichtung voneinander beabstandet angeordnet sind.

8. Anordnung nach einem der Ansprüche 3 bis 7, **dadurch gekennzeichnet, dass** die flexible Leiterplatte (10) zumindest einen Abschnitt aufweist, der als länglicher Streifen (13) ausgebildet ist.

9. Anordnung nach einem der Ansprüche 1 bis 8, **dadurch gekennzeichnet, dass** äußeres Achsenelement (12) und inneres Achsenelement (11) jeweils im Wesentlichen hohlzylindrisch ausgeführt sind.

10. Anordnung nach einem der Ansprüche 1 bis 9, **dadurch gekennzeichnet, dass** das innere Achsenelement (11) außen eine in Achsrichtung verlaufende Nut (18) oder Ausnehmung zur Aufnahme der flexiblen Leiterplatte (10) aufweist.

11. Anordnung nach einem der Ansprüche 1 bis 10, **dadurch gekennzeichnet, dass** das äußere Achsenelement (12) außen eine Vertiefung (19) oder Ausnehmung für den Sensor (1) aufweist.

12. Anordnung nach einem der Ansprüche 3 bis 11, **dadurch gekennzeichnet, dass** die Achse (4) als magnetischer Rückschluss des Magnetrings (8) ausgeführt ist.

13. Radnabeneinheit (3) für ein muskelkraftbetriebenes Fahrzeug mit einer Anordnung nach einem der Ansprüche 1 bis 12.

## Claims

1. Arrangement of a sensor (1), the signal of which is used to control an auxiliary motor (2) of a vehicle propelled by muscular strength, where said auxiliary motor (2) is integrated into a wheel hub unit (3) of said vehicle, where said wheel hub unit (3) comprises a stationary axle (4), a hub (7) rotatably mounted to said axle (4), and a freewheel (5) of the drive train propelled by muscular strength which is mounted rotatable relative to said axle (4), and where said arrangement comprises said sensor (1) and said freewheel (5), where said sensor (1) is arranged such that it detects a rotational motion of said freewheel (5) relative to said axle (4), **characterized in that** said arrangement further comprises said axle (4) and said sensor (1) is arranged on a flexible printed circuit board (10) and said flexible printed circuit board (10) comprises an electrical connection for connecting said sensor (1) to a control unit (15) of said auxiliary motor (2), and said axle (4) comprises an outer axle element (12) and an inner axle element (11) inserted into said outer axle element (12), where at least a portion of said flexible circuit board (10) extending between said sensor (1) and said control unit (15) is received between said outer axle element (12) and said inner axle element (11).

2. Arrangement according to claim 1, **characterized in that** said sensor (1) is attached to said axle (4).

3. Arrangement according to claim 1 or 2, **characterized in that** said freewheel (5) comprises a ring magnet (8), where said sensor (1) comprises at least one magnetic sensor (9) for scanning said ring magnet (8).

4. Arrangement according to claim 3, **characterized in that** said ring magnet (8) is configured as a permanent magnet and comprises a plurality of poles uniformly distributed over the circumference of said ring magnet (8).

5. Arrangement according to claim 3 or 4, **characterized in that** said magnetic sensor (9) is a Hall sensor.

6. Arrangement according to one of the claims 3 to 5, **characterized in that** said magnetic sensor (9) is configured as a flip-chip sensor.

7. Arrangement according to one of the claims 3 to 6, **characterized in that** said sensor (1) comprises two magnetic sensors (9) which are arranged spaced from each other in the circumferential direction.

8. Arrangement according to one of the claims 3 to 7, **characterized in that** said flexible circuit board (10) comprises at least one portion which is formed as an elongate strip (13).

9. Arrangement according to one of the claims 1 to 8, **characterized in that** said outer axle element (12) and said inner axle element (11) are each configured as being substantially hollow-cylindrical.

10. Arrangement according to one of the claims 1 to 9, **characterized in that** said inner axle element (11) comprises a groove (18) or a recess at the outer side extending in the direction of said axle for receiving said flexible circuit board (10).

11. Arrangement according to one of the claims 1 to 10, **characterized in that** said outer axle element (12) comprises a depression (19) or recess on the outer side for said sensor (1).

12. Arrangement according to one of the claims 3 to 11, **characterized in that** said axle (4) is embodied as a magnetic back iron of said ring magnet (8).

13. Wheel hub unit (3) for a vehicle propelled by muscular strength with an arrangement according to one of the claims 1 to 12.

## Revendications

1. Agencement d'un capteur (1) dont le signal est utilisé pour la commande d'un moteur auxiliaire d'assistance (2) d'un véhicule entraîné par la force musculaire, agencement
dans lequel le moteur auxiliaire d'assistance (2) est intégré à une unité de moyeu de roue (3) du véhicule, dans lequel l'unité de moyeu de roue (3) comprend un axe (4) en position fixe, un moyeu (7) monté en rotation sur l'axe (4), et un système de roue libre (5) de la ligne de transmission d'entraînement entraînée par la force musculaire, monté rotatif par rapport à l'axe (4), et l'agencement englobant le capteur (1) et le système de roue libre (5),
et dans lequel le capteur (1) est agencé de manière à ce qu'il relève un mouvement de rotation du système de roue libre (5) par rapport à l'axe (4),
**caractérisé en ce que** l'agencement englobe en outre l'axe (4), et le capteur (1) est agencé sur une plaque de circuit imprimé flexible (10) et la plaque de circuit imprimé flexible (10) comporte une liaison électrique pour le raccordement du capteur (1) à une unité de commande (15) du moteur auxiliaire d'assistance (2), et l'axe (4) comprend un élément d'axe extérieur (12) et un élément d'axe intérieur (11) inséré dans l'élément d'axe extérieur (12), au moins un tronçon de la plaque de circuit imprimé flexible (10), qui s'étend entre le capteur (1) et l'unité de commande (15), étant logé entre l'élément d'axe extérieur (12) et l'élément d'axe intérieur (11).

2. Agencement selon la revendication 1, **caractérisé en ce que** le capteur (1) est fixé sur l'axe (4).

3. Agencement selon la revendication 1 ou la revendication 2, **caractérisé en ce que** le système de roue libre (5) comprend un anneau magnétique (8), le capteur (1) comportant au moins un capteur magnétique (9) pour la détection de l'anneau magnétique (8).

4. Agencement selon la revendication 3, **caractérisé en ce que** l'anneau magnétique (8) est réalisé sous forme d'aimant permanent et présente plusieurs pôles répartis de manière régulière le long de la périphérie de l'anneau magnétique (8).

5. Agencement selon là revendication 3 ou la revendication 4, **caractérisé en ce que** le capteur magnétique (9) est un capteur à effet Hall.

6. Agencement selon l'une des revendications 3 à 5,
**caractérisé en ce que** le capteur magnétique (9) est réalisé sous la forme d'un capteur en technologie flip-chip (puce retournée).

7. Agencement selon l'une des revendications 3 à 6,
**caractérisé en ce que** le capteur (1) comprend deux capteurs magnétiques (9), qui sont agencés de manière à être espacés mutuellement dans la direction périphérique.

8. Agencement selon l'une des revendications 3 à 7,
**caractérisé en ce que** la plaque de circuit imprimé flexible (10) présente au moins un tronçon qui est réalisé sous la forme d'une bande allongée (13).

9. Agencement selon l'une des revendications 1 à 8,
**caractérisé en ce que** l'élément d'axe extérieur (12) et l'élément d'axe intérieur (11) sont chacun d'une configuration cylindrique creuse.

10. Agencement selon l'une des revendications 1 à 9, **caractérisé en ce que** l'élément d'axe intérieur (11) présente, sur l'extérieur, une rainure (18) ou un évidement s'étendant dans la direction longitudinale, pour accueillir la plaque de circuit imprimé flexible (10).

11. Agencement selon l'une des revendications 1 à 10, **caractérisé en ce que** l'élément d'axe extérieur (12) présente, sur l'extérieur, un creux (19) ou un évidement pour le capteur (1).

12. Agencement selon l'une des revendications 3 à 11, **caractérisé en ce que** l'axe (4) est réalisé en tant que retour magnétique de l'anneau magnétique (8).

13. Unité de moyeu de roue (3) pour un véhicule entraîné par la force musculaire, comprenant un agencement selon l'une des revendications 1 à 12.
